# EUROPEAN PATENT SPECIFICATION

(11) **EP 3 986 220 B1**
(45) Date of publication and mention of the grant of the patent: **18.03.2026**
(21) Application number: 20746269.8
(22) Date of filing: 19.06.2020
(51) Int. Cl.: A47J 47/01, A47G 19/34, G01F 11/18

(54) **DOSING DEVICE AND METHOD OF OPERATING THE DOSING DEVICE**
DOSIERVORRICHTUNG UND VERFAHREN ZUM BETRIEB EINER DOSIERVORRICHTUNG
DISPOSITIF DE DOSAGE ET PROCÉDÉ DE FONCTIONNEMENT DU DISPOSITIF DE DOSAGE

(30) Priority: 19.06.2019 PT 2019115590
(43) Date of publication of application: 27.04.2022
(73) Proprietor: Universidade Do Porto, 4099-002 Porto (PT); INEGI - Instituto de Ciência e Inovação em Engenharia Mecânica e Engenharia Industrial, 4200-465 Porto (PT)
(72) Inventor: GERALDES TOURO PEREIRA, Joa o Paulo, 4200-465 Porto (PT); RODRIGUES DIAS ESTEVES, Sílvia Alexandra, 4200-465 Porto (PT); DA QUINTA E COSTA NEVES DE OLIVEIRA, Lui s Miguel, 4200-465 Porto (PT); TEIXEIRA DA SILVA, Jorge Manuel, 4200-465 Porto (PT); DA SILVA GONÇALVES, Carla Cristina, 4099-002 Porto (PT); AFONSO DE SOUSA MOREIRA, Pedro Alexandre, 4099-002 Porto (PT); CASTRO PINHO, Olívia Maria, 4099-002 Porto (PT); SOARES RICARDO GRAÇA, António Pedro, 4099-002 Porto (PT)
(74) Representative: Monteiro Alves, Inês
(86) International application number: PCT/IB2020/055793
(87) International publication number: WO 2020/255070

(56) References cited:
- WO-A2-2008/012814
- GB-A- 747 690
- US-A- 5 855 300

## Description

### Field of the Invention

The present invention is related to a dosing device to monitor and control granulated foods usage during food preparation or cooking and a method of operating said dosing device.

The dosing device can be used for any type of granulated product to be dosed, as is the case, among others, of salt, sugar, spices and certain granulated drugs.

A dosing device according to the invention and its method of operation are defined in the independent claims. Preferred embodiments are the subject-matter of the dependent claims. In particular, the device of the invention comprises:
i. a translucent top storage that serves as a reservoir of the granulate
ii. one, two, four or more dosing movable push buttons with different sizes that trigger the dispense of the granulated product, being the dosage levelled by a static blade;
iii. each dosing push buttons would be pre-set with the number of people ingesting that meal providing this way the exact amount recommended by the World Health Organization - WHO;
iv. a removable tray at the base of the dosing device where the granulated product, as is the case, among others, of salt, is dispensed;
v. manufactured material compatible with washing at high temperatures.

The dosing device is portable, then, it can be used either during food preparation or cooking process.

The dosing device, specifically the dosing push buttons and the top storage, can be adapted for different doses and food matrices.

### Background and Prior Art

In Portugal, cerebrovascular disease and all diseases associated with malignant tumours are the major causes of mortality and morbidity, and excessive salt intake is associated with its genesis. In this regard, WHO advises member countries to adopt measures to reduce salt consumption to a value of less than 5 g/d. To achieve this, different strategies are encouraged to monitor and reduce the supply of salt.

According to recent data, the salt consumption of the Portuguese adult population is about 10 g/d. It is estimated that a high proportion comes from excessive addition during cooking and food preparation, one of the most recognized unhealthy eating practices. In this sense, it is urgent to introduce mechanisms to allow the quantification of the salt added to foods during its preparation and culinary practices.

At present, there is no equipment on the market that allows dosing the quantities of salt used to make meals, and salt shakers that are usually used only to store or grind the salt. At the catering level, given the pressure to reduce the use of salt, some approaches have been made, but with limitations due to the lack of adequate instruments for this purpose.

The average salt content of meals varies, and a soup served in public canteens can have between 1.2 g of salt (24% of the total daily recommended salt intake) and 2.0 g of salt (40% of the daily total of recommended salt intake).

These limitations and challenges to adopt healthy eating practices motivated the development of this innovation, which aims to develop and demonstrate, in a real environment of use, the application of portable and user-friendly devices that automatically make available different amounts of salt that may be consistent with healthy cooking of meals for adults and children to attain the dietary recommendations to prevent non-communicable diseases.

Promoted by the consortium formed by the University of Porto (through FCNAUP) and INEGI, the project will consist of the development and demonstration of an innovative, portable, simple, accurate, and reliable instrument for monitoring and controlling the use of salt during the cooking process within the real context of families making meals and catering.

Cardiovascular disease (CVD), together with its main components, coronary heart disease, and cerebrovascular diseases, is the main source of morbidity and mortality in the European Union, and is estimated to cost €169 billion annually. CVD are the leading cause of death in Portugal and cost € 1.2 million annually. In 2014, inadequate dietary habits were the major risk factor that contributed to the total Disability Adjusted Life Years (DALY) by the Portuguese population, being low fruit eating and sodium rich food the main responsible factors for these years of healthy life lost.

It was estimated that the reduction of population-wide salt consumption by only 15% would avert up to 8.5 million deaths in 23 high-burden countries over 10 years. It is expected that reducing daily salt intake of population to less than 5 grams a substantially reduction on the burden of cardiovascular disease and mortality in several European countries occur.

The excessive consumption of salt by population is one of the greatest risks of Public Health in Portugal, making urgent to propose measures for its reduction. Small reductions in consumption can bring great benefits to the health of population, not only in terms of cardiovascular diseases, but also in relation to other chronic diseases prevalent in Portugal.

In European countries the large proportion of salt ingested is added in food production and foods eaten away from the home, is estimated that 75-85% of salt intake comes from these sources and 10-12% occurs naturally on foods, similarly proportion to be from added salt at home or at table. In Portuguese adolescents, our research team, found that in addition to bread (mean 16%), sodium added during the cooking process is the chief source of sodium intake as in pasta, rice, and other cereal-based products (mean 12%), meat products (mean 16%), fish and seafood products (mean 5%), and vegetable soup (mean 10%).

The range of salt content for foods varies widely, inclusively the same food could have different salt content based on different brands or processing. However salt is naturally present in few foods, for example milk, the large majority of salt was added to food during processing or cooking. Depending on which product a person chooses to eat the sodium ingested could vary greatly. Our group published in 2012 results from a study where was analysed sodium content present in vegetable soups served in several canteens as kindergartens, schools and nursing homes.

Average amount of sodium could reach 269.06 mg/100g of soup, i.e. in a 300 g portion was 2049 mg of salt and the mean salt content varies greatly between places and had a higher standard deviation which means that do not exist a pattern of salt addition during cooking. The salt content of available foods in the marketplace and from restaurants makes difficult for consumers to meet dietary guidelines.

Salt is an enhancer to taste of foods, however high levels of salt are unpleasant and repulsive. With exposure to consistent high levels of salt in foods high levels of salt become appetizing and people start to choose foods with high salt content. Research suggests that preferred level of salt in food is dependent on the level of salt consumed and that this preferred level can be lowered after a reduction in sodium intake.

Salt taste was innate salt-specific taste receptors activated by sodium ion. The perceived intensity of sodium chloride varies between individuals, a specific concentration required to induce a weak saltiness sensation in one individual may be strongly salty to another, and these differences appear to result from variation in taste sensation (17).

The preferred level of sodium in foods could be lowered over time if sodium levels consumed decreased, resulting in an increase in perceived salt intensity and decrease liking of high salt content foods (18-20).

So, the reduction of salt intake by populations was recognized and adopted by World Health Organization (WHO) as a priority to reduce the number of subjects with non-communicable diseases.

WHO recommends that sodium intake be less than 2000 mg/day (5 g/day of salt). Reduction of salt was considered a "best buy" for governments around the world, due to its low cost implementation and because all policies to reduce dietary salt intake could gain life-years and reduce health care expenditure. In 2013, all members states of WHO signed up to the target to reduce salt intake in population by 30% by 2025 with a target 5 g per day.

The most popular approach to reduce national salt intake in Portugal was the adoption of national legislation in relation to salt content in bread. In 2009, salt content in bread was limited to 1.4g per 100g.

In 2015, the Portuguese Government assumed that salt reduction was imperative for public health, and promoted the creation of the interministerial Working Group (28) with the mission to set measures to reduce population salt intake, particularly by reducing the supply of food products high in salt, namely in catering.

The Working Group presented 14 proposals that summarize the priorities and strategies adopted by consensus among food industry, government elements and researcher.

The consensus document highlights the necessity to set quantifiable reduction targets and monitor salt in terms of consumption (population/ consumer) and supply (food and meals on sale).

The development of a quick and user friendly instrument to monitor and control salt adding to foods during cooking in catering and home could be part of the solution to control salt intake by population.

Patent applications for dosing and dispensers are known in the state of the art, as is the case, among others, of patent applications US2016069722, US2553509, US1708130, WO02064006, and WO2008012814.

The patent application US2016069722 relates to a dispenser having one or more cavities, wherein the cavities may be selectively opened and closed such that by controlling the cavity and closing of the cavities, material may be dispensed.

The patent application US2553509 relates to sugar dispensers of the valve type, wherein a portion of sugar in an aperture is fully released when the user completely depresses a plunger. The sugar may also be partially released by means of a manually partially depressing of the plunger by the user.

The patent application US1708130 relates to a sugar container, wherein the user manually controls the releasing of a portion of sugar after pressing a button connected by a spring to a drawer. The sugar releasing is interrupted when the pressure over the button is removed by the user.

The patent application WO02064006 relates to a dispensing device for batch dispensing granular products. The device comprises a chamber, which holds a certain amount of a granular product and wherein said product in the chamber is released when a bottom is pressed. This dispensing device does not provide chambers of different volumes to release different amounts of product. Moreover, this device does not comprise means to avoid agglomeration of the product in the chamber, in order to deliver a precise amount of a granular product.

The patent application WO2008012814 relates to a dispenser adapted to dispense one of at least two predetermined amounts of particulate materials from a container. The dispenser revealed in this prior art document does not comprise a sliding button configured to trigger a rotation of a second part of its push button within a recess of the front sliding part.

No dosing or dispensing device comprising the technical features claimed in the present invention is known in the art as is the case, among others, of the features that form the dosing mechanism (9) which includes:

- a top plate (3);
- a blade (26);
- at least a dosing push button (6);
- an intermediate plate (5) for insertion of at least a dosing push button (6).

### Brief Description of Drawings

For a more complete understanding of the invention, the following description is based on the attached figures, which, without limitation, show:
**Fig.1**

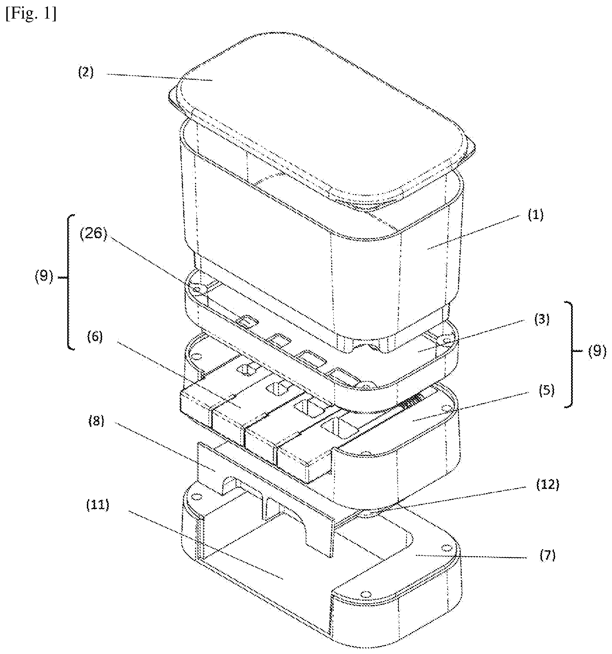

   [Fig.1] perspective view of each of the components constituting the dosing device;
**Fig.2**

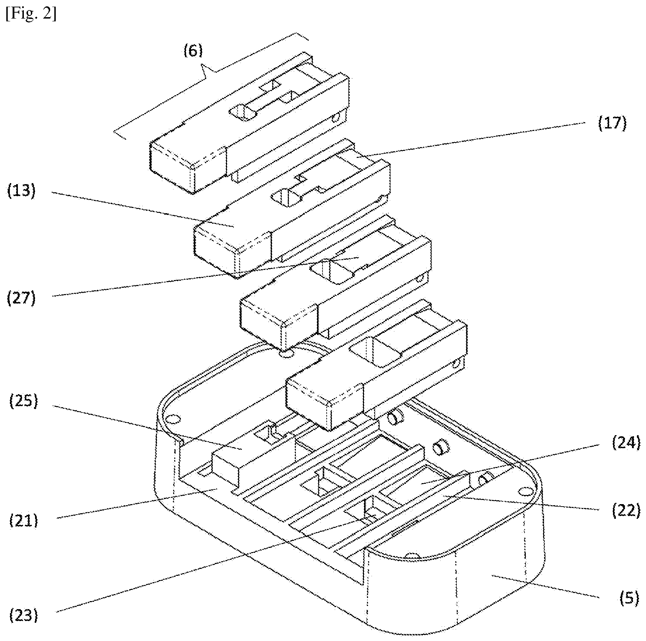

   [Fig.2] perspective view of the dosing mechanism (9) showing in detail push buttons (6) and the intermediate plate (5);
**Fig.3**

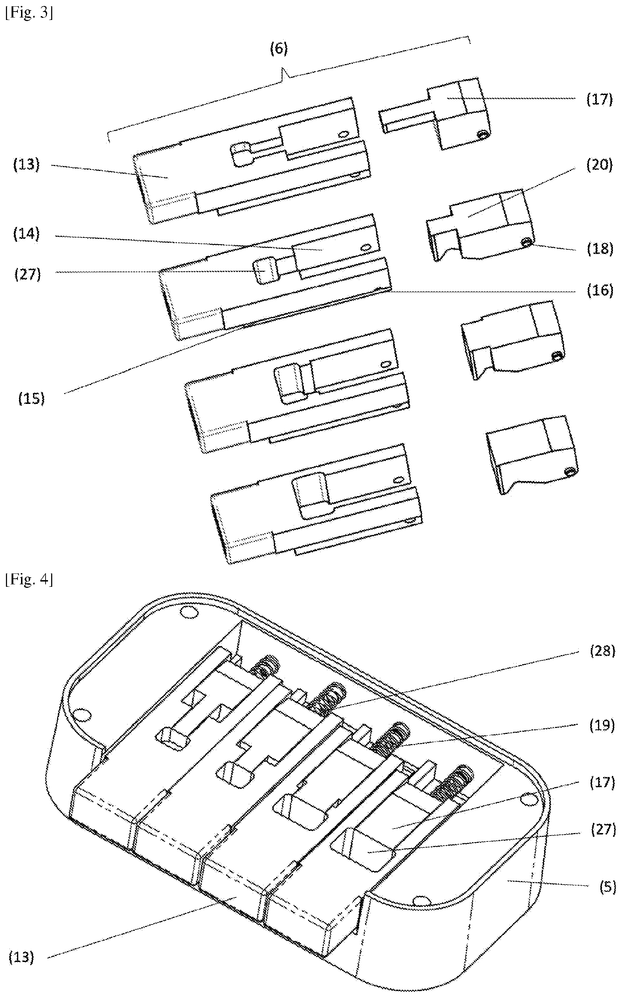

   [Fig.3] perspective view of each of the components constituting the dosing push button (6);
**Fig.4**
   [Fig.4] perspective view of the dosing push button (6), the intermediate plate (5) and the spring (19);
**Fig.5**

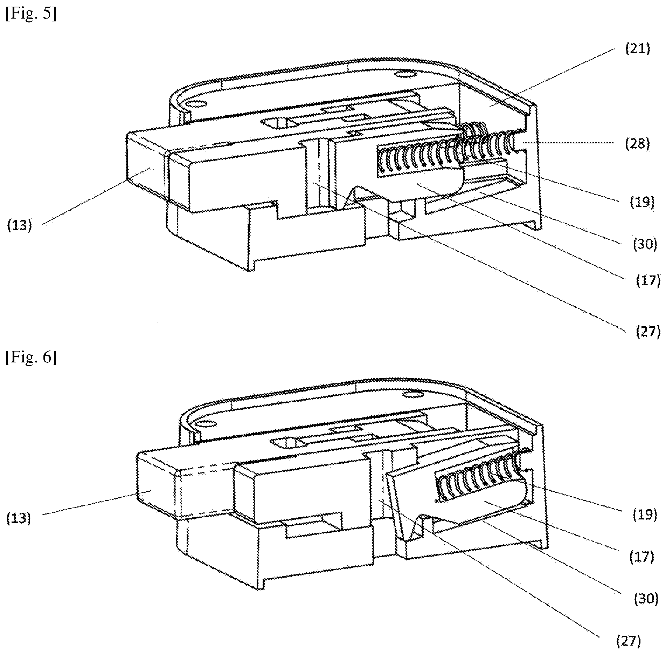

   [Fig.5] Cut view of the dosing push button (6), the intermediate plate (5) and the spring (19);
**Fig.6**
   [Fig.6] Cut view of the pressed dosing push button (6), the intermediate plate (5) and the spring (19);
**Fig.7**

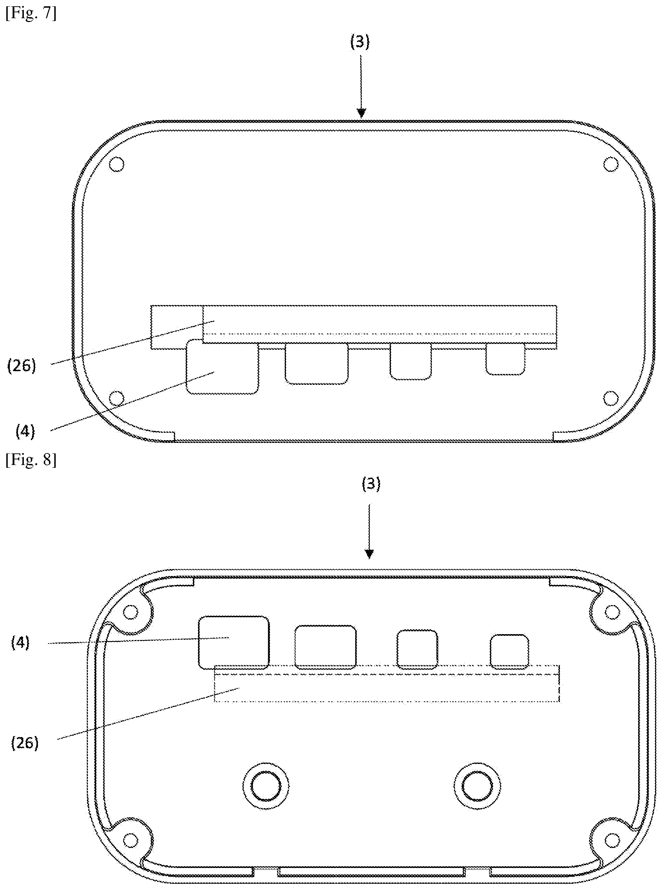

   [Fig.7] bottom view of the top plate (3);
**Fig.8**
   [Fig.8] top view of the top plate (3);
**Fig.9**

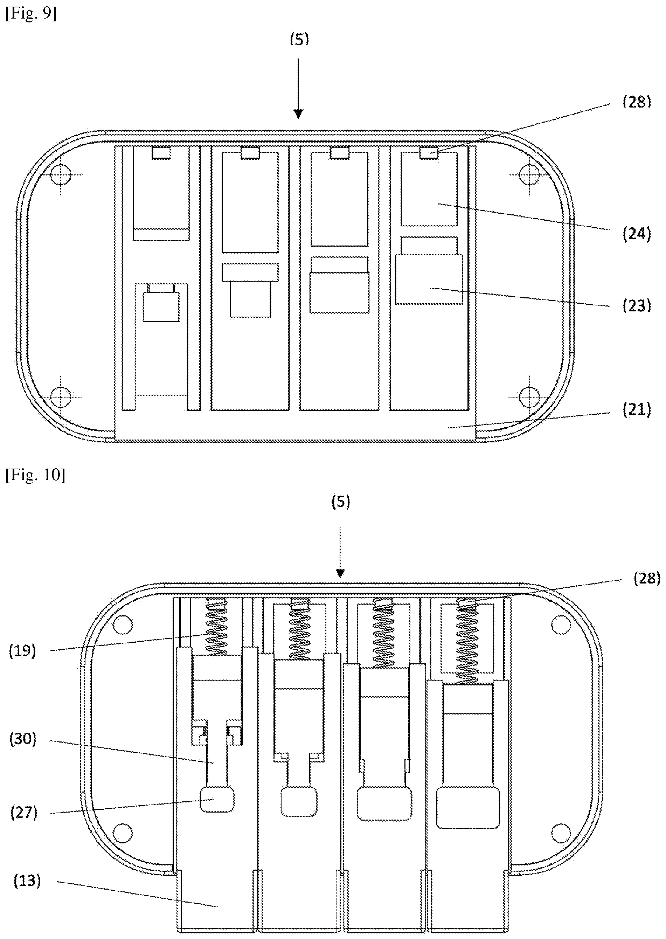

   [Fig.9] top view of the intermediate plate (5);
**Fig.10**
   [Fig.10] top view of the intermediate plate (5), the dosing push button (6) and the spring (19);
**Fig.11**

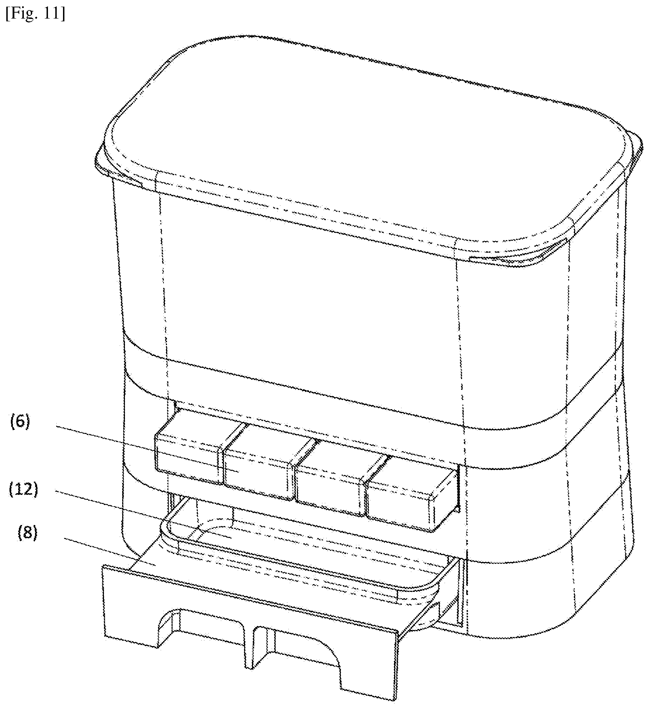

   [Fig.11] perspective view of the dosing push buttons (6) and reservoir (12);
**Fig.12**

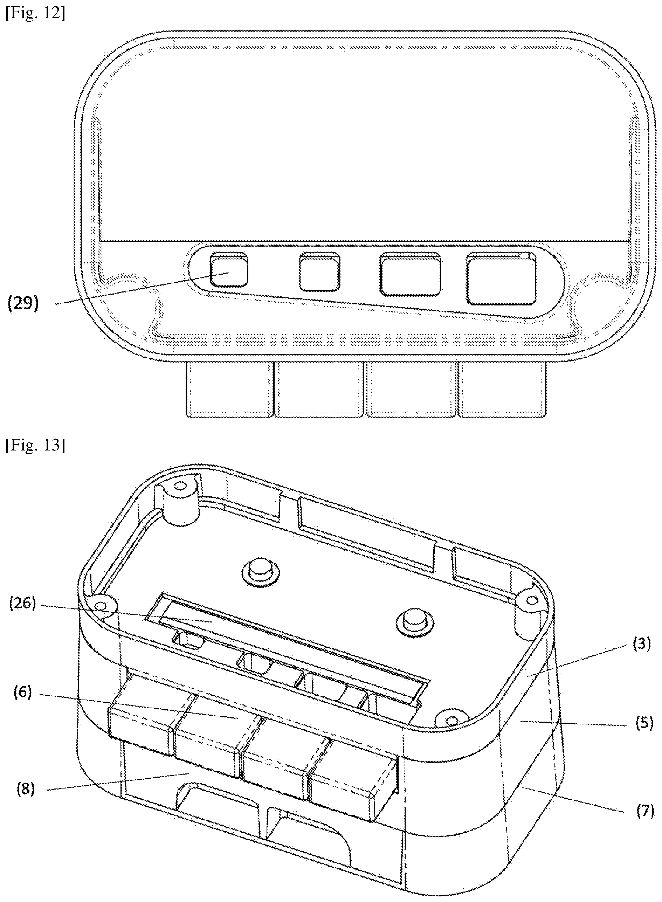

   [Fig.12] top view of the vertical dosing hole (29); and
**Fig.13**
   [Fig.13] perspective view of the top plate (3), the blade (26), the intermediate plate (5), the dosing push button (6), the lower plate (7) and the tray (8).

### Detailed description

The present invention is defined by the claims. Any subject-matter falling outside the scope of the claims is provided for information purposes only. As can be seen in figure 1, the present invention comprises:
- a top storage (1) that comprises a cover (2);
- a top plate (3);
- at least a dosing push button (6);
- an intermediate plate (5) for insertion of at least a dosing push button (6); and
- a lower plate (7) for insertion of at least a tray (8) for storing the product to be dosed, which are
respectively and sequentially engaged and inserted into each other to form a single device.

In figure 1 is shown a dosing mechanism (9) that includes:
- a top plate (3);
- blade (26);
- at least a dosing push button (6);
- an intermediate plate (5) for insertion of at least a dosing push button (6).

### Top storage (1)

The top storage (1) comprises a vertical dosing hole (29), as can be seen in figure 12.

The vertical dosing hole (29) is disposed parallel to the top storage container 1 and will be located superimposed on each respective vertical top dosing hole 4.

The top storage (1) is manufactured with a translucent material and comprises a vertical graduated ruler.

### Top plate (3)

The top plate (3) shown in Figures 1, 7 and 8 is fitted between the top storage (1), the intermediate plate (5) and between at least one dosing push button (6).

The top plate (3) comprises a horizontal blade (26), as shown in Figures 7, 8 and 13.

The blade (26) of the dosing mechanism (9) is manufactured with Stainless Steel 316L or other edge retaining material.

The top plate (3), according to one of the embodiments of the present invention, comprises at least a vertical top dosing hole (4), as illustrated in figures 7 and 8.

The number of vertical top dosing holes (4) in the top plate (3) and vertical intermediate dosing holes (23) in the intermediate plate (5) is equal to the number of buttons (6).

The vertical top dosing holes (4) are located in the top plate (3) and arranged parallel to each other.

The vertical top dosing hole (4) has a rectangular shape.

The area of the top dosing hole (4) depends on the quantity of the product to be dosed.

The vertical top dosing hole (4) comprises a filter, not shown in the figures.

### Intermediate plate (5)

The intermediate plate 5 and respective dosing push button (6) shown in figures 1, 2, 4, 10 and 13 are fitted between the top plate (3) and the lower plate 7 in which it is inserted at least a tray (8) for storing the product to be dosed.

The intermediate plate (5) comprises at least an intermediate recess (21) for engaging at least a push button (6).

The intermediate plate (5), as shown in figure 2 comprises:
- a horizontal intermediate recess (21);
- at least 2 vertical walls (22) for sliding;
- a vertical dosing hole (23); and
- a cavity (24) for pivoting a rear pivoting part (17) which comprises a slope (30) to support the rear pivoting part (17) in the pivoting movement, as shown in figures 5 and 6.

According to one of the embodiments of the present invention, an intermediate recess (21) comprises a vertical projection (25), as shown in figure 2.

The vertical intermediate dosing hole (23) is located in the intermediate plate (5) and arranged parallel to each other and aligned.

Similar to the vertical top dosing hole (4), the area of the vertical intermediate dosing hole (23) depends on the quantity of product to be dosed.

The vertical intermediate dosing hole (23) has a rectangular shape.

According to one of the embodiments of the present invention the dosing device comprises 2, 3, 4, 5, 6 or more buttons (6).

### Dosing push button (6)

The dosing push button (6), as shown in the figures 1, 2 and 3 comprises:
- a front sliding part of the push button (13) that includes:
   ∘ a vertical sliding rear recess (14) that comprises a shaped like a "U";
   ∘ a vertical sliding dosing hole (27) which is contiguous to the front part of the vertical sliding rear recess (14);
   ∘ a sliding lower support (15); and
   ∘ 2 horizontal, lower, rear and lateral holes (16)
- a rear pivoting part (17) that
   ∘ includes 2 horizontal, lower, rear and lateral spigots (18) for insertion and engagement in the respective lateral holes (16), being the said 2 horizontal, lower, rear and lateral spigots (18) the axles through which the rear pivoting part (17) moves clockwise or counter clockwise;
   ∘ is inserted into the vertical sliding rear recess (14);
   ∘ pivots inside of the vertical sliding rear recess (14);
   ∘ pivots counter-clockwise whenever the front sliding part of the push button (13) is pushed by means of a force with a horizontal direction and a left-to-right direction;
   ∘ pivots clockwise by means of the force exerted by the spring (19), which exerts a force with a horizontal direction and with a right-to-left direction;
- the horizontal spring (19), which is simultaneously inserted into the rear pivoting part (17) and fitted into the intermediate plate (5).

As illustrated in figures 5 and 9, The horizontal spring (19) is simultaneously inserted into the rear pivoting part (17) and fitted into the horizontal fixing spigot (28) which is fixed to the intermediate plate (5).

According to one of the embodiments of the present invention, the rear pivoting part (17) comprises a horizontal spigot (20), as illustrated in figure 3.

The horizontal spigot (20) is used according to and comprises a variable length depending on the quantity of the product to be dosed.

The horizontal spigot (20) is used for the dosing of small doses of the product to be dosed.

### Lower plate (7)

The lower plate (7), as shown in the figure 1, comprises a lower recess (11) for engaging at least a tray (8).

According to one of the embodiments of the present invention, the dosing device comprises 2, 3, 4, 5, 6 trays (8).

The tray (8) comprises a lower reservoir (12) for storing the product to be dosed, as shown in figure 11.

### Dosing device

In the dosing device, shown in figure 1, the:
- top storage (1);
- cover (2);
- top plate (3);
- intermediate plate (5);
- dosing push button (6);
- lower plate (7); and
- tray (8)
are made independently from each other by injection moulding of plastics or other manufacturing processes.

As discussed above the dimensions of many components constituting the dosing device may vary according to each of the embodiments of the present invention and also according to the quantity of the product to be dosed.

Dosing device comprises an internal electronic device (31), not shown in the figures, for monitoring, controlling and communicating bilaterally with an external electronic device (32), not shown in figures, by means of a wired or wireless communication, all the dosing operations occurring in the dosing device.

The external electronic device (32) is:
- a computer;
- an electronic mobile device, such as a mobile phone, smartphone, tablet and/ or smartwatch;
which commands and monitors in real time all activities on the consumptions of the product to be dosed that occur in the dosing device.

The external electronic device (32) comprises respectively a software or an APP that commands and monitors in real time all activities on the consumptions of the product to be dosed that occur in the dosing device.

### Method of operating the dosing device

A method of operating the dosing device as that comprises the following steps:
i. open the cover (2);
ii. fill the top storage (1) with the product to be dosed;
iii. by gravity force the product to be dosed passes through the vertical dosing hole (29) of the dosing push button (6);
iv. by means of gravity force the product to be dosed passes through the respective vertical top dosing hole (4);
v. by gravity force the product to be dosed falls inward and fills the vertical sliding dosing hole (27);
vi. by means of a pressure force with horizontal direction and left to right direction, the front part of the push button (13) exits from the rest position, sliding and simultaneously dragging the product to be dosed contained in the vertical sliding dosing hole (27), as illustrated in figures 5 and 6;
vii. the blade (26) levels the amount of product to be dosed contained in the vertical sliding dosing hole (27), by means of the horizontal sliding of the front part of the push button (13);
viii. the front part of the push button (13) by means of the horizontal, lower, rear and lateral holes (16) where the horizontal, lower, rear and lateral spigots (18) are inserted, is pushed and consequently pivots counter clockwise direction the rear pivoting part (17);
ix. vertical sliding dosing hole (27) is aligned with the vertical intermediate dosing hole (23), the rear pivoting part (17) is at its maximum opening and the product to be dosed is lowered by means of the force of gravity and passes through the vertical intermediate dosing hole (23);
x. the product to be dosed falls on the tray (8); and
xi. the dosing push button (6), in particular the front part of the push button (13) and rear pivoting part (17), are returned to the initial position by the force exerted by the spring 19, which has a horizontal direction and a right-to-left direction.

All changes, if they do not modify the essential features of the claims which follow, are to be considered within the scope of the protection of the present invention, as long as they fall within the scope of the appended claims.

### Reference Signs List

- top storage (1);
- cover (2);
- top plate (3);
- vertical top dosing hole (4);
- intermediate plate (5);
- dosing push button (6);
- lower plate (7);
- tray (8);
- dosing mechanism (9);
- lower recess (11);
- lower reservoir (12);
- front part of the push button (13);
- vertical sliding rear recess (14);
- sliding support (15);
- 2 horizontal, lower, rear and lateral holes (16);
- rear pivoting part (17);
- 2 horizontal, lower, rear and lateral spigots (18);
- spring (19);
- horizontal spigot (20);
- intermediate recess (21);
- at least 2 vertical walls (22);
- vertical intermediate dosing hole (23);
- cavity (24);
- vertical projection (25);
- blade (26);
- vertical sliding dosing hole (27);
- horizontal fixing spigot (28);
- vertical dosing hole (29);
- slope (30);
- internal electronic device (31); and
- external electronic device (32).

## Claims

1. Dosing device comprising:
• a top storage (1) that comprises a cover (2);
• a dosing mechanism that includes:
∘ a top plate (3);
∘ a blade (26), which is arranged at the top plate (3);
∘ at least a dosing push button (6);
∘ an intermediate plate (5) for insertion of at least a dosing push button (6);
∘ a tray (8);
• a lower plate (7), which is configured for insertion of the tray (8) for storing the product to be dosed,
which are respectively and sequentially engaged and inserted into each other to form a single device;
wherein the dosing push button (6) comprises:
• a front sliding part of the push button (13) that includes:
∘ a vertical sliding rear recess (14) that comprises a shape like a "U";
∘ a vertical sliding dosing hole (27) which is contiguous to the front part of the vertical sliding rear recess (14);
∘ a sliding lower support (15); and
∘ 2 horizontal, lower, rear and lateral holes (16), which are arranged in the sliding lower support (15);
• a rear pivoting part (17) that
o includes 2 horizontal, lower, rear and lateral spigots (18) for insertion and engagement in the respective lateral holes (16), being the said 2 horizontal, lower, rear and lateral spigots (18) the axles through which the rear pivoting part (17) moves clockwise or counter clockwise;
∘ wherein the rear pivoting part (17) is inserted into the vertical sliding rear recess (14);
∘ wherein the rear pivoting part (17) is configured to be pivoted inside of the vertical sliding rear recess (14);
∘ wherein the rear pivoting part (17) is configured to be pivoted counter-clockwise whenever the front sliding part of the push button (13) is pushed by means of a force with a horizontal direction and a left-to-right direction, wherein the left reference for the horizontal direction is the front sliding part of the push button (13) and the right reference for the horizontal direction is the rear face of the intermediate plate (5);
∘ wherein the rear pivoting part (17) is configured to be pivoted clockwise by means of the force exerted by the spring (19), which exerts a force with a horizontal direction and with a right-to-left direction; and
wherein
• wherein the horizontal spring (19), which is simultaneously inserted into the rear pivoting part (17) and configured to be fitted into the intermediate plate (5).

2. Dosing device according to the preceding claim, **characterized in that** the top storage (1) comprises a vertical dosing hole (29).

3. Dosing device according to claim 1, **characterized in that** the top plate (3) comprises at least a vertical top dosing hole (4).

4. Dosing device according to claim 1, **characterized in that** the rear pivoting part (17) comprises a horizontal spigot (20).

5. Dosing device according to claim 1, **characterized in that** the horizontal spring (19) is simultaneously inserted into the rear pivoting part (17) and fitted into the horizontal fixing spigot (28) which is fixed to the intermediate plate (5).

6. Dosing device according to claim 1, **characterized in that** the intermediate plate (5) comprises at least an intermediate recess (21) for engaging at least the push button (6).

7. Dosing device according to claim 1, **characterized in that** the intermediate plate (5) comprises:
• a horizontal intermediate recess (21);
• at least 2 vertical walls (22), for sliding and engaging the sliding support (15);
• a vertical dosing hole (23); and
• a cavity (24) for pivoting the rear pivoting part (17) which comprises the slope (30) to support the rear pivoting part (17) in the pivoting movement.

8. Dosing device according to the preceding claim, **characterized in that** an intermediate recess (21) comprises a vertical projection (25).

9. Dosing device according to claims 1, 3, and 7, **characterized in that** the number of vertical top dosing holes (4) in the top plate (3) and vertical intermediate dosing holes (23) in the intermediate plate (5) is equal to the number of buttons (6).

10. Dosing device according to claim 3, **characterized in that** the vertical top dosing holes (4) are located in the top plate (3) and arranged parallel to each other.

11. Dosing device according to claim 7, **characterized in that** the vertical intermediate dosing holes (23) are located in intermediate plate (5) and arranged parallel to each other and aligned.

12. Dosing device according to claim 1, **characterized in that** it comprises 2, 3, 4, 5, 6 or more buttons (6).

13. Dosing device according to claim 1, **characterized in that** the lower plate (7) comprises a lower recess (11) for engaging at least a tray (8).

14. Dosing device according to claim 1, **characterized in that** it comprises 2 or more trays (8).

15. Dosing device according to claim 1, **characterized in that** the tray (8) comprises a lower reservoir (12) for storing the dosed product.

16. Dosing device according to claim 1, **characterized in that** the top storage (1) is manufactured with a translucent material and comprises a vertical graduated ruler.

17. Dosing device according to claim 1, **characterized in that**:
• the top storage (1);
• the cover (2);
• the top plate (3);
• the intermediate plate (5)
• the dosing push button (6);
• the lower plate (7); and
• the tray (8)
are made independently from each other by injection moulding of plastics or other manufacturing processes.

18. Dosing device according to claim 1, **characterized in that** the blade (26) of the dosing mechanism (9) is manufactured with Stainless Steel 316L or other edge retaining material.

19. Dosing device according to claim 1, **characterized in that** it comprises an internal electronic device (31) for monitoring, controlling and communicating bilaterally with an external electronic device (32), by means of a wired or wireless communication, all the dosing operations occurring in the dosing device.

20. Dosing device according to claim 19, **characterized in that** the external electronic device (32) is:
• a computer;
• an electronic mobile device, such as a mobile phone, smartphone, tablet and/ or smartwatch;
which commands and monitors in real time all activities on the consumptions of the product to be dosed that occur in the dosing device.

21. Dosing device according to claim 19, **characterized in that** the external electronic device (32), which communicates bilaterally with the internal electronic device (31) comprised in the dosing device, comprises respectively a software or an APP that commands and monitors in real time all activities on the consumptions of the product to be dosed that occur in the dosing device.

22. A method of operating the dosing device as defined in any of the claims 3, 9, 10 and 11, **characterized in that** it comprises the following steps:
i. open the cover (2);
ii. fill the top storage (1) with the product to be dosed;
iii. by gravity force the product to be dosed passes through the vertical dosing hole (29) of the dosing push button (6);
iv. by means of gravity force the product to be dosed passes through the respective vertical top dosing hole (4);
v. by gravity force the product to be dosed falls inward and fills the vertical sliding dosing hole (27);
vi. by means of a pressure force with horizontal direction and left to right direction, the front part of the push button (13) exits from the rest position, sliding and simultaneously dragging the product to be dosed contained in the vertical sliding dosing hole (27), wherein the left reference for the horizontal direction is the front sliding part of the push button (13) and the right reference for the horizontal direction is the rear face of the intermediate plate (5);
vii. the blade (26) levels the amount of product to be dosed contained in the vertical sliding dosing hole (27), by means of the horizontal sliding of the front part of the push button (13);
viii. the front part of the push button (13) by means of the horizontal, lower, rear and lateral holes (16) where the horizontal, lower, rear and lateral spigots (18) are inserted, is pushed and consequently pivots counter clockwise direction the rear pivoting part (17);
ix. vertical sliding dosing hole (27) is aligned with the vertical intermediate dosing hole (23), the rear pivoting part (17) is at its maximum opening and the product to be dosed is lowered by means of the force of gravity and passes through the vertical intermediate dosing hole (23)
x. the product to be dosed falls on the tray (8); and
xi. the dosing push button (6), in particular the front part of the push button (13) and rear pivoting part (17), are returned to the initial position by the force exerted by the spring 19, which has a horizontal direction and a right-to-left direction.

## Patentansprüche

1. Dosiervorrichtung, umfassend:
• einen oberen Speicher (1), der eine Abedeckung (2) umfasst;
• einen Dosiermechanismus, der Folgendes umfasst:
∘ eine obere Platte (3);
∘ eine Klinge (26), die an der oberen Platte (3) angeordnet ist;
∘ mindestens einen Dosierdruckknopf (6);
∘ eine Zwischenplatte (5) zum Einsetzen mindestens eines Dosierdruckknopfs (6);
∘ eine Schale (8);
• eine untere Platte (7), die zum Einsetzen der Schale (8) zum Aufbewahren des zu dosierenden Produkts konfiguriert ist,
die jeweils nacheinander ineinander eingreifen und eingesetzt werden, um eine einzige Vorrichtung zu bilden;
wobei der Dosierdruckknopf (6) Folgendes umfasst:
- einen vorderen Gleitteil des Druckknopfs (13), der Folgendes umfasst:
∘ eine vertikale, verschiebbare hintere Aussparung (14), die eine U-förmige Gestalt umfasst;
∘ ein vertikales I Gleitdosierloch (27), die an den vorderen Teil der vertikalen, verschiebbaren hinteren Aussparung (14) angrenzt;
∘ eine untere Gleitschiene (15); und
∘ 2 horizontale, untere, hintere und seitliche Löcher (16), die in der unteren Gleitschiene (15) angeordnet sind;
• ein hinteres Schwenkteil (17), das
∘ zwei horizontale, untere, hintere und seitliche Ausgießer (18) zum Einführen und Eingreifen in die entsprechenden seitlichen Löcher (16) umfasst, wobei die beiden horizontalen, unteren, hinteren und seitlichen Ausgießer (18) die Achsen sind, um die sich das hintere Schwenkteil (17) im Uhrzeigersinn oder gegen den Uhrzeigersinn bewegt;
∘ wobei der hintere Schwenkteil (17) in die vertikale verschiebbare hintere Aussparung (14) eingeführt wird;
∘ wobei der hintere Schwenkteil (17) so konfiguriert ist, dass er innerhalb der vertikalen verschiebbaren hinteren Aussparung (14) geschwenkt werden kann;
∘ wobei der hintere Schwenkteil (17) so konfiguriert ist, dass er gegen den Uhrzeigersinn geschwenkt wird, wenn der vordere Gleitteil des Druckknopfs (13) mit einer Kraft in horizontaler Richtung und von links nach rechts gedrückt wird, wobei das vordere Gleitteil des Druckknopfs (13) als linke Referenz für die horizontale Richtung und die Rückseite der Zwischenplatte (5) als rechte Referenz für die horizontale Richtung dienen;
∘ wobei der hintere Schwenkteil (17) so konfiguriert ist, dass er durch die von der Feder (19) ausgeübte Kraft im Uhrzeigersinn geschwenkt wird, wobei die Feder eine Kraft horizontal und von rechts nach links ausübt; und
• wobei die horizontale Feder (19) gleichzeitig in das hintere Schwenkteil (17) eingesetzt und so konfiguriert ist, dass sie in die Zwischenplatte (5) passt.

2. Dosiervorrichtung nach dem vorstehenden Anspruch, **dadurch gekennzeichnet, dass** der obere Speicher (1) eine vertikales Dosierloch (29) aufweist.

3. Dosiervorrichtung nach Anspruch 1, **dadurch gekennzeichnet, dass** die obere Platte (3) mindestens ein vertikales oberes Dosierloch (4) aufweist.

4. Dosiervorrichtung nach Anspruch 1, **dadurch gekennzeichnet, dass** das hintere Schwenkteil (17) einen horizontalen Ausgießer (20) umfasst.

5. Dosiervorrichtung nach Anspruch 1, **dadurch gekennzeichnet, dass** die horizontale Feder (19) gleichzeitig in das hintere Schwenkteil (17) eingeführt und in den horizontalen Befestigungsausgießer (28) eingesetzt wird, der an der Zwischenplatte (5) befestigt ist.

6. Dosiervorrichtung nach Anspruch 1, **dadurch gekennzeichnet, dass** die Zwischenplatte (5) mindestens eine Zwischenaussparung (21) zum Eingriff mit mindestens dem Druckknopf (6) aufweist.

7. Dosiervorrichtung nach Anspruch 1, **dadurch gekennzeichnet, dass** die Zwischenplatte (5) Folgendes umfasst:
• eine horizontale Zwischenaussparung (21);
• mindestens zwei vertikale vertikal Wände (22) zum Gleiten und Eingreifen in die Gleitschiene (15);
• ein vertikalesDosierloch (23); und
• einen Hohlraum (24) zum Schwenken des hinteren Schwenkteils (17), der die Schräge (30) umfasst, um das hintere Schwenkteil (17) bei der Schwenkbewegung zu stützen.

8. Dosiervorrichtung nach dem vorstehenden Anspruch, **dadurch gekennzeichnet, dass** eine Zwischenaussparung (21) einen vertikalenvertikalVorsprung (25) aufweist.

9. Dosiervorrichtung nach den Ansprüchen 1, 3 und 7, **dadurch gekennzeichnet, dass** die Anzahl der vertikalen oberen Dosierlöcher (4) in der oberen Platte (3) und der vertikalenmittleren Dosierlöcher (23) in der mittleren Platte (5) der Anzahl der Knöpfe (6) entspricht.

10. Dosiervorrichtung nach Anspruch 3, **dadurch gekennzeichnet, dass** die vertikalen oberen Dosierlöcher (4) in der oberen Platte (3) angeordnet und parallel zueinander ausgerichtet sind.

11. Dosiervorrichtung nach Anspruch 7, **dadurch gekennzeichnet, dass** die vertikalen mittlerenDosierlöcher (23) in der Zwischenplatte (5) parallel zueinander angeordnet und ausgerichtet sind.

12. Dosiervorrichtung nach Anspruch 1, **dadurch gekennzeichnet, dass** sie 2, 3, 4, 5, 6 oder mehr Knöpfe (6) umfasst.

13. Dosiervorrichtung nach Anspruch 1, **dadurch gekennzeichnet, dass** die untere Platte (7) eine untere Aussparung (11) zum Eingriff mit mindestens einer Schale (8) aufweist.

14. Dosiervorrichtung nach Anspruch 1, **dadurch gekennzeichnet, dass** sie 2 oder mehr Schalen (8) umfasst.

15. Dosiervorrichtung nach Anspruch 1, **dadurch gekennzeichnet, dass** die Schale (8) einen unteren Behälter (12) zum Aufbewahren des dosierten Produkts umfasst.

16. Dosiervorrichtung nach Anspruch 1, **dadurch gekennzeichnet, dass** der obere Speicher (1) aus einem lichtdurchlässigen Material hergestellt ist und eine vertikale Maßleiste aufweist.

17. Dosiervorrichtung nach Anspruch 1, **dadurch gekennzeichnet, dass**:
• der obere Speicher (1);
• die Abdeckung (2);
• die obere Platte (3);
• die Zwischenplatte (5)
• der Dosierdruckknopf (6);
• die untere Platte (7); und
• die Schale (8)
unabhängig voneinander durch Spritzgießen von Kunststoffen oder andere Prozesse hergestellt werden.

18. Dosiervorrichtung nach Anspruch 1, **dadurch gekennzeichnet, dass** die Klinge (26) des Dosiermechanismus (9) aus Edelstahl 316L oder einem anderen kantenbeständigen Material hergestellt ist.

19. Dosiervorrichtung nach Anspruch 1, **dadurch gekennzeichnet, dass** sie eine interne elektronische Vorrichtung (31) umfasst, die alle in der Dosiervorrichtung stattfindenden Dosiervorgänge überwacht, steuert und über eine drahtgebundene oder drahtlose Kommunikation bilateral mit einer externen elektronischen Vorrichtung (32) kommuniziert.

20. Dosiervorrichtung nach Anspruch 19, **dadurch gekennzeichnet, dass** die externe elektronische Vorrichtung (32)
• ein Computer ist;
• eine elektronische mobile Vorrichtung ist, wie beispielsweise ein Mobiltelefon, ein Smartphone, ein Tablet und/oder eine Smartwatch;
die alle Aktivitäten hinsichtlich des Verbrauchs des zu dosierenden Produkts, die in der Dosiervorrichtung stattfinden, in Echtzeit steuert und überwacht.

21. Dosiervorrichtung nach Anspruch 19, **dadurch gekennzeichnet, dass** die externe elektronische Vorrichtung (32), die bilateral mit der in der Dosiervorrichtung enthaltenen internen elektronischen Vorrichtung (31) kommuniziert, jeweils eine Software oder eine APP umfasst, die in Echtzeit alle Aktivitäten zum Verbrauch des zu dosierenden Produkts steuert und überwacht, die in der Dosiervorrichtung auftreten.

22. Ein Verfahren zum Betrieb der Dosiervorrichtung nach einem der Ansprüche 3, 9, 10 und 11, **dadurch gekennzeichnet, dass** es die folgenden Schritte umfasst:
i. Öffnen der Abdeckung (2);
ii. Befüllen des oberen Speichers (1) mit dem zu dosierenden Produkt;
iii. Durch die Schwerkraft durchläuft das zu dosierende Produkt durch das vertikale Dosierloch (29) des Dosierdruckknopfs (6);
iv. Durch die Schwerkraft durchläuft das zu dosierende Produkt durch das jeweilige vertikale obere Dosierloch (4);
v. Durch die Schwerkraft fällt das zu dosierende Produkt nach innen und füllt das vertikale Gleitdosierloch (27).
vi. Durch eine Druckkraft horizontal und von links nach rechts verlässt der vordere Teil des Druckknopfs (13) die Ruheposition, gleitet und zieht gleichzeitig das zu dosierende Produkt, das sich in dem vertikalen Gleitdosierloch (27) befindet, mit sich, wobei die linke Referenz für die horizontale Richtung der vordere Gleitteil des Druckknopfs (13) und die rechte Referenz für die horizontale Richtung die Rückseite der Zwischenplatte ist. (5);
vii. Die Klinge (26) nivelliert die Menge des zu dosierenden Produkts, das sich in dem vertikalen Gleitdosierloch (27) befindet, durch horizontales Gleiten des vorderen Teils des Druckknopfs (13).
viii. Der vordere Teil des Druckknopfs (13) wird mittels der horizontalen, unteren, hinteren und seitlichen Löcher (16), in die die horizontalen, unteren, hinteren und seitlichen Ausgießer (18) eingeführt werden, gedrückt und dreht dadurch den hinteren Schwenkteil (17) gegen den Uhrzeigersinn.
ix. Das vertikale Gleitdosierloch (27) mit dem vertikalenmittleren Dosierloch(23) ausgerichtet ist, der hintere Schwenkteil (17) seine maximale Öffnung erreicht hat und das zu dosierende Produkt durch die Schwerkraft abgesenkt wird und durch das vertikale mittlereDosierloch (23) hindurchfällt.
x. Das zu dosierende Produkt fällt auf die Schale (8).
xi. Der Dosierdruckknopf (6), insbesondere der vordere Teil des Druckknopfs (13) und der hintere Schwenkteil (17), werden durch die Kraft der Feder 19, die eine horizontale Richtung und eine Richtung von rechts nach links hat, in die Ausgangsposition zurückgebracht.

## Revendications

1. Dispositif de dosage comprenant :
• une réserve supérieure (1)qui comprend un couvercle (2) ;
• un mécanisme de dosage qui comprend :
∘ une plaque supérieure (3) ;
∘ une lame (26), qui est disposée sur la plaque supérieure (3) ;
∘ au moins un bouton-poussoir de dosage (6) ;
∘ une plaque intermédiaire (5) pour l'insertion d'au moins un bouton-poussoir de dosage (6) ;
∘ un plateau (8);
une plaque inférieure (7), configurée pour l'insertion du plateau (8) pour le stockage du produit à doser,
qui sont respectivement et séquentiellement engagés et insérés l'un dans l'autre pour former un seul dispositif ;
dans lequel le bouton-poussoir de dosage (6) comprend :
• une partie coulissante avant du bouton poussoir (13) qui comprend :
∘ une cavité arrière coulissante verticale (14) qui comprend une forme en "U";
∘ un trou de dosage vertical coulissant (27) qui est contigu à la partie avant du renfoncement arrière vertical coulissant (14) ;
∘ un support inférieur coulissant (15) ; et
∘ 2 trous horizontaux, inférieurs, arrière et latéraux (16), qui sont disposés dans le support inférieur coulissant (15) ;
• une partie pivotante arrière (17) qui
∘ comprend 2 ergots horizontaux, inférieurs, arrière et latéraux (18) pour l'insertion et l'engagement dans les trous latéraux respectifs (16), lesdits 2 ergots horizontaux, inférieurs, arrière et latéraux (18) étant les axes par lesquels la partie pivotante arrière (17) se déplace dans le sens des aiguilles d'une montre ou dans le sens inverse des aiguilles d'une montre ;
∘ dans lequel la partie pivotante arrière (17) est insérée dans la cavité arrière coulissante verticale (14) ;
∘ dans lequel la partie pivotante arrière (17) est configurée pour être pivotée à l'intérieur du renfoncement arrière coulissant vertical (14) ;
∘ dans lequel la partie pivotante arrière (17) est configurée pour pivoter dans le sens inverse des aiguilles d'une montre chaque fois que la partie coulissante avant du bouton poussoir (13) est poussée au moyen d'une force avec une direction horizontale et une direction gauche-droite, dans laquelle la référence gauche pour la direction horizontale est la partie coulissante avant du bouton poussoir (13) et la référence droite pour la direction horizontale est la face arrière de la plaque intermédiaire (5) ;
∘ dans lequel la partie pivotante arrière (17) est configurée pour être pivotée dans le sens des aiguilles d'une montre au moyen de la force exercée par le ressort (19), qui exerce une force dans le sens horizontal et dans le sens droite-gauche ; et
• dans lequel le ressort horizontal (19), qui est simultanément inséré dans la partie pivotante arrière (17) et configuré pour être monté dans la plaque intermédiaire (5).

2. Dispositif de dosage selon la revendication précédente, **caractérisé en ce que** la réserve supérieure (1) comprend un trou de dosage vertical (29).

3. Dispositif de dosage selon la revendication 1, **caractérisé en ce que** la plaque supérieure (3) comprend au moins un trou de dosage vertical supérieur (4).

4. Dispositif de dosage selon la revendication 1, **caractérisé en ce que** la partie pivotante arrière (17) comprend un embout horizontal (20).

5. Dispositif de dosage selon la revendication 1, **caractérisé en ce que** le ressort horizontal (19) est simultanément inséré dans la partie pivotante arrière (17) et emboîté dans l'embout de fixation horizontal (28) qui est fixé à la plaque intermédiaire (5).

6. Dispositif de dosage selon la revendication 1, **caractérisé en ce que** la plaque intermédiaire (5) comprend au moins une cavité intermédiaire (21) pour engager au moins le bouton-poussoir (6).

7. Dispositif de dosage selon la revendication 1, **caractérisé en ce que** la plaque intermédiaire (5) comprend :
• une cavité intermédiaire horizontale (21) ;
• au moins 2 parois verticales (22), pour le coulissement et l'engagement du support coulissant (15) ;
• un trou de dosage vertical (23) ; et
• une cavité (24) pour le pivotement de la partie pivotante arrière (17) qui comprend la pente (30) pour soutenir la partie pivotante arrière (17) dans le mouvement de pivotement.

8. Dispositif de dosage selon la revendication précédente, **caractérisé en ce qu'**une cavité intermédiaire (21) comprend une saillie verticale (25).

9. Dispositif de dosage selon les revendications 1, 3 et 7, **caractérisé en ce que** le nombre de trous de dosage verticaux supérieurs (4) dans la plaque supérieure (3) et de trous de dosage verticaux intermédiaires (23) dans la plaque intermédiaire (5) est égal au nombre de boutons (6).

10. Dispositif de dosage selon la revendication 3, **caractérisé en ce que** les trous de dosage verticaux supérieurs (4) sont situés dans la plaque supérieure (3) et disposés parallèlement les uns aux autres.

11. Dispositif de dosage selon la revendication 7, **caractérisé en ce que** les trous de dosage intermédiaires verticaux (23) sont situés dans la plaque intermédiaire (5) et sont disposés parallèlement l'un à l'autre et alignés.

12. Dispositif de dosage selon la revendication 1, **caractérisé en ce qu'**il comprend 2, 3, 4, 5, 6 ou plus de boutons (6).

13. Dispositif de dosage selon la revendication 1, **caractérisé en ce que** la plaque inférieure (7) comprend une cavité inférieure (11) pour engager au moins un plateau (8).

14. Dispositif de dosage selon la revendication 1, **caractérisé en ce qu'**il comprend 2 ou plusieurs plateaux (8).

15. Dispositif de dosage selon la revendication 1, **caractérisé en ce que** le plateau (8) comprend un réservoir inférieur (12) pour le stockage du produit dosé.

16. Dispositif de dosage selon la revendication 1, **caractérisé en ce que** le réservoir supérieur (1) est fabriqué avec un matériau translucide et comporte une règle graduée verticale.

17. Dispositif de dosage selon la revendication 1, **caractérisé en ce que** :
• la réserve supérieure (1) ;
• le couvercle (2) ;
• la plaque supérieure (3) ;
• la plaque intermédiaire (5)
• le bouton-poussoir de dosage (6)
• le plateau inférieur (7) ; et
• le plateau (8)
sont fabriqués indépendamment les uns des autres par moulage par injection de matières plastiques ou par d'autres procédés de fabrication.

18. Dispositif de dosage selon la revendication 1, **caractérisé en ce que** la lame (26) du mécanisme de dosage (9) est fabriquée en acier inoxydable 316L ou dans un autre matériau retenant les arêtes.

19. Dispositif de dosage selon la revendication 1, **caractérisé en ce qu'**il comprend un dispositif électronique interne (31) pour surveiller, contrôler et communiquer bilatéralement avec un dispositif électronique externe (32), au moyen d'une communication câblée ou sans fil, toutes les opérations de dosage se produisant dans le dispositif de dosage.

20. Dispositif de dosage selon la revendication 19, **caractérisé en ce que** le dispositif électronique externe (32) est :
- un ordinateur ;
- un appareil électronique mobile, tel qu'un téléphone portable, un smartphone, une tablette et/ou une montre intelligente ;
qui commande et surveille en temps réel toutes les activités relatives à la consommation du produit à doser qui se produisent dans le dispositif de dosage.

21. Dispositif de dosage selon la revendication 19, **caractérisé en ce que** le dispositif électronique externe (32), qui communique bilatéralement avec le dispositif électronique interne (31) compris dans le dispositif de dosage, comprend respectivement un logiciel ou un APP qui commande et surveille en temps réel toutes les activités relatives aux consommations du produit à doser qui ont lieu dans le dispositif de dosage.

22. Un procédé de fonctionnement du dispositif de dosage tel que défini dans l'une quelconque des revendications 3, 9, 10 et 11, **caractérisé en ce qu'il** comprend les étapes suivantes :
i. ouvrir le couvercle (2) ;
ii. remplir le réservoir supérieur (1) avec le produit à doser ;
iii. par gravité, le produit à doser passe à travers le trou de dosage vertical (29) du bouton-poussoir de dosage (6) ;
iv. par la force de gravité, le produit à doser passe par le trou de dosage vertical supérieur respectif (4) ;
v. sous l'effet de la gravité, le produit à doser tombe vers l'intérieur et remplit le trou de dosage vertical coulissant (27) ;
vi. au moyen d'une force de pression exercée dans le sens horizontal et de gauche à droite, la partie avant du bouton-poussoir (13) sort de sa position de repos, faisant glisser et entraînant simultanément le produit à doser contenu dans le trou de dosage vertical coulissant (27), dans lequel la référence gauche pour la direction horizontale étant la partie avant coulissante du bouton-poussoir (13) et la référence droite pour la direction horizontale étant la face arrière de la plaque intermédiaire (5) ;
vii. la lame (26) nivelle la quantité de produit à doser contenue dans l'orifice de dosage vertical coulissant (27), au moyen du glissement horizontal de la partie avant du bouton-poussoir (13) ;
viii. la partie avant du bouton-poussoir (13), par moyen des orifices horizontaux, inférieurs, arrière et latéraux (16) où sont insérés les ergots horizontaux, inférieurs, arrière et latéraux (18), est poussée et pivote par conséquent dans le sens inverse des aiguilles d'une montre en direction de la partie pivotante arrière (17) ;
ix. le trou de dosage coulissant vertical (27) est aligné avec le trou de dosage intermédiaire vertical (23), la partie pivotante arrière (17) est à son ouverture maximale et le produit à doser est abaissé par la force de gravité et passe à travers le trou de dosage intermédiaire vertical (23)
x. le produit à doser tombe sur le plateau (8) ; et
xi. le bouton-poussoir de dosage (6), en particulier la partie avant du bouton-poussoir (13) et la partie arrière pivotante (17), sont ramenés à la position initiale par la force exercée par le ressort 19, qui a une direction horizontale et une direction droite-gauche.
